# EUROPEAN PATENT APPLICATION

(11) **EP 1 296 180 A1**
(43) Date of publication of application: **26.03.2003**
(21) Application number: 01943897.7
(22) Date of filing: 02.07.2001
(51) Int. Cl.: G03B 21/56

(54) **FRONT SCREEN, REAR SCREEN AND APPLICATION PRODUCT USING THEM**

(30) Priority: 30.06.2000 JP 2000199470; 09.11.2000 JP 2000382942; 27.12.2000 JP 2000397389; 27.12.2000 JP 2000399611
(71) Applicant: Ibiden Co., Ltd., Ogaki-shi, Gifu 501-0917 (JP)
(72) Inventor: UNO, Takahiro, Ogaki-shi, Gifu 503-0961 (JP); YONEYAMA, Kazuo, Ogaki-shi, Gifu 503-0961 (JP)
(74) Representative: Torggler, Paul Norbert, Dr.
(86) International application number: JP0105708
(87) International publication number: WO02003135

(57) **Abstract**

A foldable screen is disclosed, which can be used continuously over a long period without distortion, allows writing thereon, and is resistant against physical damages. The screen comprises a resin impregnated paper sheet. The screen may be made into a front screen or a rear screen. The screen may further comprise a thermoplastic resin sheet integrally provided on the resin impregnated paper sheet. The screen may be mounted over a glass pane to provide an advertising media or made into a partition screen. An information board system is also provided utilizing a glass pane type screen and a projector.

## Description

### Background of the Invention

### 1. Field of the Invention:

The present invention relates to a front screen and a rear screen as well as their applied products.

### 2. Related Art:

A conventional projection screen board comprises a PMMA or vinyl chloride board on which a resin layer such as an urethane layer is integrated to provide a reflection surface as disclosed in Japanese Laid-Open Patent Publication No. 8-43948 or an acrylic board containing diffusion particles.

Those screen boards are rigid and do not fold for storage when not in use. In addition, due to the thermoplastic nature of PMMA and vinyl chloride, those conventional screen boards warp when used continuously for an extended period of time, deflecting the screen images. Furthermore, letters written or drawings depicted on those screen boards will not be readily and cleanly erased. In addition, a pointer can easily damage the surface of those screen boards.

Screen boards or screens are expected to faithfully reproduce the original colors, for which it is required to reproduce blue light and red light in practically equal contrast, for which again excellent whiteness of the screen surface is indispensable.

Conventional screens such as those described above do not provide a desired degree of surface whiteness or equal contrast between blue and red lights.

It is conventionally practiced to utilize show windows or glass walls as advertisement media. Posters are affixed on shop windows or glass walls of shops to attract pedestrians attention. However, such advertisement media have become so conventional and less effective.

Naturally, it is required to prepare new posters or the like and replace the old ones with the new ones when change of the advertisement contents is desired. It is understood that peeling off old posters from shop windows and affixing new ones in replacement requires some work. The cost of producing new posters cannot be neglected.

There exists a demand for a new way of utilizing shop windows or glass walls as advertisement media.

Conventionally, a display apparatus such as an electronic bulletin board or plasma vision board is put up on a building wall for various purposes.

Such an display apparatus becomes exponentially expensive as its size increases, which prevents wide utilization of such external display apparatuses.

Demands for utilization nf building windows and glass walls in alternative and less costly ways are steadily growing.

### Summary of the Invention

The present invention offers an answer to the above-mentioned demands.

It is an object of the present invention to provide a screen which can be easily stored, can be used continuously for an extended period of time, allows direct writing and drawing, and is resistant to surface damages.

It is another object of the present invention to provide an excellently bright screen which is capable of reproducing the colors faithful to original images as well as equally contrasting blue light and red light.

It is another object of the present invention to provide a screen to be used on a shop window or building window as an advertisement or information medium.

It is still another object of the present invention to provide products which utilize screens of the present invention.

The term "front screen" as used herein is a projection screen onto which images are to be projected with a projector from the viewers' side, and the term "rear screen" is a screen onto which images are to be projected from the rear side. The term "screen" is directed to either "front screen" or "rear screen".

A screen of the present invention comprises a resin impregnated paper sheet comprising a paper substrate which is preferably transparent paper having an ash content of equal to or less than 5% and a thickness of about 10 µm to 200 µ m. The transparent paper is preferably 30g/m² - 180g/m². Polyolefin or polyester fibers may be blended in the paper.

The resin is preferably a tharmosetting resin. Two or more different types selected from melamine, diallyl phthalate and phenol resins may be used. Melamine and diallyl phthalate resins having a high transparency are preferred. A plasticized modified melamine resin is preferred. Thermoplastic resins having high melting points may also be used. For example, polyethylene phthalate, polyester and olefin resins may be used.

A brightening material may be advantageously blended in the resin impregnated paper sheet or in the resin to be impregnated. The former is preferred, which makes the screen surface more resistant to physical damages. The brightening material may be an inorganic material such as silica, alumina, zirconia, titanium oxide, glass powder, calcium carbonate or barium sulfate. The inorganic material powder preferably has a mean particle size 0.1µm to 1000µm.

A rear screen of the present invention preferably has a visible light transmittance of 30% to 80% and is light dispersive. A front screen of the present invention has excellent brightness.

In an embodiment, the resin impregnated paper is placed between hot press stainless plates and pressed and then cooled to provide a screen of the present invention.

A rear projector system incorporating a rear screen of the present invention is provided comprising a projector with a slide unit to slide a film or liquid crystal panels and a light source.

A front screen according to an embodiment of the present invention can be obtained by integrally adhering a thermoplastic resin layer on a side of a resin impregnated paper sheet. The front screen provides a total reflectance equal to or greater than 90% and whiteness equal to or greater than 80% (JIS-L-1015, Japanese industrial standard), which reflects blue light and red light in equal contrast and provides substantially equal reflection over a visible light wavelength range 400 nm (blue light) to 700 nm (red light). Images are reflected on the bonded portion of the resin impregnated paper sheet and resin layer.

In assistance to realize the reflectance greater than 90% and whiteness greater than 80%, the thermoplastic resin may contain inorganic particles. Alternatively the resin layer may be provided with pores. It is preferable that the mean pore size is 1µm to 100µm.

A plurality of thermoplastic resin layers selected from polyethylene terephthalate, vinyl chloride, polymethyl methacrylate, polyolefin and polyester resins may be advantageously used.

The front screen or rear screen of the present invention may be applied on a glass pane directly or indirectly. Also, the screen of the present invention can be utilized in a variety of ways.

The screen of the present invention can be rolled up for storage or transportation. The screen can be framed or used as a partition to name a few.

The screen manufactured through a hot-press process can be used as a writing board while used as a projection screen. The resin impregnated paper of the screen does not chemically react with water or solvents, letters written or pictures drawn on the screen can be easily erased. The screen surface is resistant to physical damages.

The screen of the present invention as applied on a glass pane or wall provides a novel information board system comprising a projector and a projector control device. The system further comprises image transmitting means, memory means, computation means, input means and storage means.

The information board system may be either a front screen system or rear screen system. The front screen system will facilitate people to view the screen from inside the building nr shop while the rear screen system will facilitate people to view the screen from outside the building or shop.

The screen of the front screen type information board system possesses an excellently bright projection surface, while the screen of the rear screen type information board system possesses an excellent light dispersing. In order to provide excellent brightness for the front screen and excellent light scattering property for the rear screen, a brightening material or materials *are* blended in their resin impregnated paper sheets.

When brightening materials are blended in the resin impregriated paper sheet (not coated), excellency of projected images will not be materially damaged even if the screen surface is somehow physically damaged to a degree.

As set forth earlier, the screen of the rear type information board system possesses an excellent light transmittance property, such as 30% to 80%. When the resin impregnated paper sheet is to be bonded to a glass pane using an adhesive, such an adhesive need be highly transparent.

The information board system of the present invention may be used with a shop window or building window, e.g., as an advertisement medium for projecting a still image or moving images having advertising contents. Such advertising media are novel and it is naturally expected that the screened images of the present invention powerfully attract pedestrians and the effects of the advertisement are exceptional.

Unlike similar conventional devices, the information board system of the present invention does not require removal of old advertisement materials. Only simple change of films or the like is required by changing image data. Such changes are simple and easy. Therefore, the present invention holds advertisement costs very low while providing improved advertising effects.

The information board system of the present invention is light weight. Change of size does not materially affect the weight or price, which is a great advantage over the prior art screen of similar nature. Even a large size information board system can be installed very easily with a low cost. Change of the system is also easy.

### Brief Description of the Drawings

Fig. 1 is a pirtial sectional view of a screen according to an embodiment of the present invention;
Fig. 2 is a partial sectional view of a screen according to another embodiment of the present invention;
Fig. 3 is a partial sectional view of a front screen according to an embodiment of to the present invention;
Fig. 4 is a partial sectional view of a front screen according to another embodiment of the present invention;
Fig. 5 is a front view of a screen product according to an embodiment of the present invention;
Fig. 6 shows how a rear type screen of the present invention is used;
Fig. 7 shows the structure of a rear-type screen projector according to an embodiment of the present invention;
Fig. 8 is a partial sectional view of the structure of a screen according to an embodiment of the present invention;
Fig. 9(A) and 9(B) are partial sectional views of the structures of screen devices according to other embodiments of to the present invention;
Fig. 10 is a schematic view of an information board system according to an embodiment of the present invention;
Fig. 11 is a block diagram of a projector control device according to an embodiment of the present invention; and
Fig. 12 is a schematic view of an information board system according to an embodiment of to the present invention.

### Description of terms used in the drawings:

1......resin impregnated paper sheet; 2......substrate paper; 3......resin; 4......thermoplastic resin layer; 5......glass pane; 6......adhesive layer; 7......attachment member; 8......suction disk; 9......dual adhesion tape; 10......screen; 10a......front screen; 10b......rear screen; 21......frame; 22......support leg; 30......partition; 40......projector; 60......housing; 61......base; 62......light source; 63......slide device; 64......rear projector; 70a, 70b......information board system; 71.....rear projector; 80......projector controller

### Description of the Preferred Embodiments

Screens and products incorporating the screens of the present invention together with their manufacture will be described in detail hereunder according to various embodiments depicted in the accompanying drawings without limiting the scope of the present invention.

### Embodiment 1

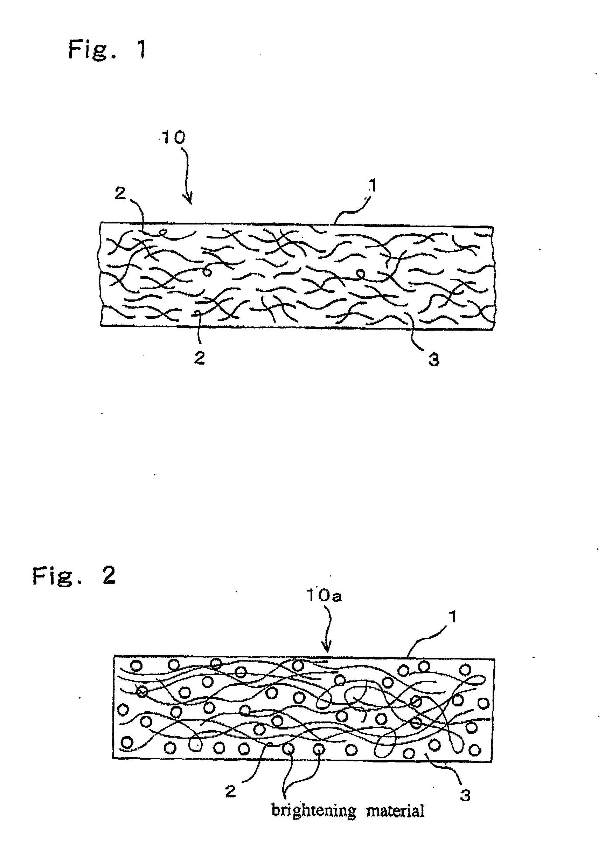

In Fig. 1 is shown a screen 10 comprising a resin impregnated paper sheet 1 comprising a substrate paper 2 and a resin impregnated in the substrate paper 2.

A transparent paper "MOL-D-100" (manufactured by DAIFUKU PAPER M.F.G. CO., LTD.) having an ash content of less than 5% and a weight 100 g/m² was used as the substrate paper 2, and a plasticized modified melamine resin 3 was used as the resin 3. The melamine resin was prepared; blending 1.7 mol 37% formaldehyde aqueous solution with 1 mol melamine: adjusting the blend to pH 9.0 with sodium hydroxide; and leaving the blend to chemically react for 60 minutes under 90°C.

The resin impregnated paper sheet 2 was placed between hot-press stainless plates with fine surface irregularities. The paper sheet 2 was subjected to hot press at 140°C and pressure at 7.85 MPa for about 10 minutes, and then subjected to cold press for about 10 minutes. A hardened resin impregnated paper sheet 1 or screen 10 was obtained.

### Embodiment 2

In Fig.2 is shown another screen 10a comprising a resin impregnated paper sheet 1 comprising a substrate paper 2 and a resin 3 impregnated in the substrate paper 2, which was similar to the paper sheet 1 of embodiment 1, except that 30 wt% inorganic powder or titanium nitride powder having a mean diameter of 0.1 µm to 1000 µ m was further blended as a brightening material. The other respects are the same as those in the first embodiment. This screen can be used as a front screen.

Tests and measurement were conducted on the screen 10a with regards thickness, light resistance, spectral reflectance, solvent resistance, contamination resistance, hot-water resistance, thermal resistance, moisture resistance, dimensional change and surface hardness. The results and the conditions of the tests and measurement are shown in Table 1. For comparison, a white screen (silica containing polyvinyl chloride) was used.

**Table 1**

| Evaluation Item | Test Condition | | Embodiment 2 | Comparison |
|---|---|---|---|---|
| Thickness | | mm | 0.12 | 0.4 |
| Light resistance 48 hrs Projection | Mercury Lamp | ΔE | 1.7 | 0.8 |
| | Carbon Lamp | ΔE | 0.8 | 1.0 |
| Spectral Reflection | total | % | 98 | 96 |
| | Dispersal | % | 96 | 90 |
| Solvent Resistance | Acetone, Toluene, etc. | | No Change | whitened |
| Contamination Resistance | JIS-K-6902 | | No Change | Changed to 2% mercurochrome aqueous solution and crayon |
| Hot-Water Resistance | JIS-K-6902 | | No Change | Softened |
| Thermal Resistance | 60°C, 48hs, | | No Change | Deformed |
| Moisture Resistance | 40°C, 90%RH, 168hs. | | No Change | No Change |
| Dimensional Change | 20°C, 95% - 30%RH, 24hs. | % | 0.82 | 0.10 |
| Surface Hardness | Handwriting by pencil | | 2H | B |

### Embodiment 3

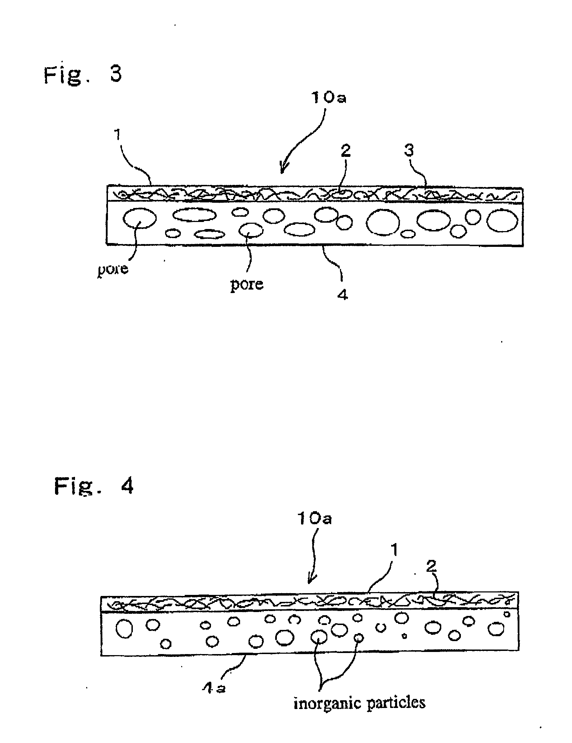

In Fig.3 is shown a front screen 10a comprising a porous thermoplastic resin sheet 4 and a resin impregnated paper sheet 1 bonded together.

The thermoplastic resin sheet 4 was a 0.26mm thick porous polyethylene terephthalate resin sheet 4 of MCPET (manufactured by Furukawa Electric Co., Ltd.).

The resin impregnated paper sheet 1 was a transparent paper sheet of MOL-D-L00 (manufactured by DAIFUKU PAPER M.F.G. CO., LTD.) having an ash content of less than 5% and weighing 100 g/m². Further, 30 wt% inorganic powder of titanium oxide having a mean diameter of 0.1µm to 1000µm was blended as a brightening material.

The resin 3 impregnated in the paper sheet 2 was a plasticized modified melamine resin 3.

The resin impregnated paper sheet 1 was integrated with the thermoplastic resin sheet 4 after coming through a hardening process: hot press step between hot-press stainless plates at 140°C and 7.85 MPa for about 10 minutes; and cold press step about 10 minutes. The resin impregnated paper sheet 1 was integrated with the thermoplastic resin sheet 4 (MCPET) with an urethane adhesive to provide a front screen 10a.

### Embodiment 4

In Fig. 4 is shown a front screen 10a comprising a thermoplastic resin sheet 4a which was "Lumirror^{R} E20#188" (manufactured by Toray Industries, Inc.) and a resin impregnated paper sheet 1. In the thermoplastic resin sheet 4a which was polyethylene terephthalate were blended inorganic particles of titanium oxide (shown in exaggerated size for convenience). The resin impregnated paper 1 was identical with that of embodiment 1.

Product quality tests were conducted on the front screens 10a of Embodiments 3 and 4. The test results are shown in Table 2.

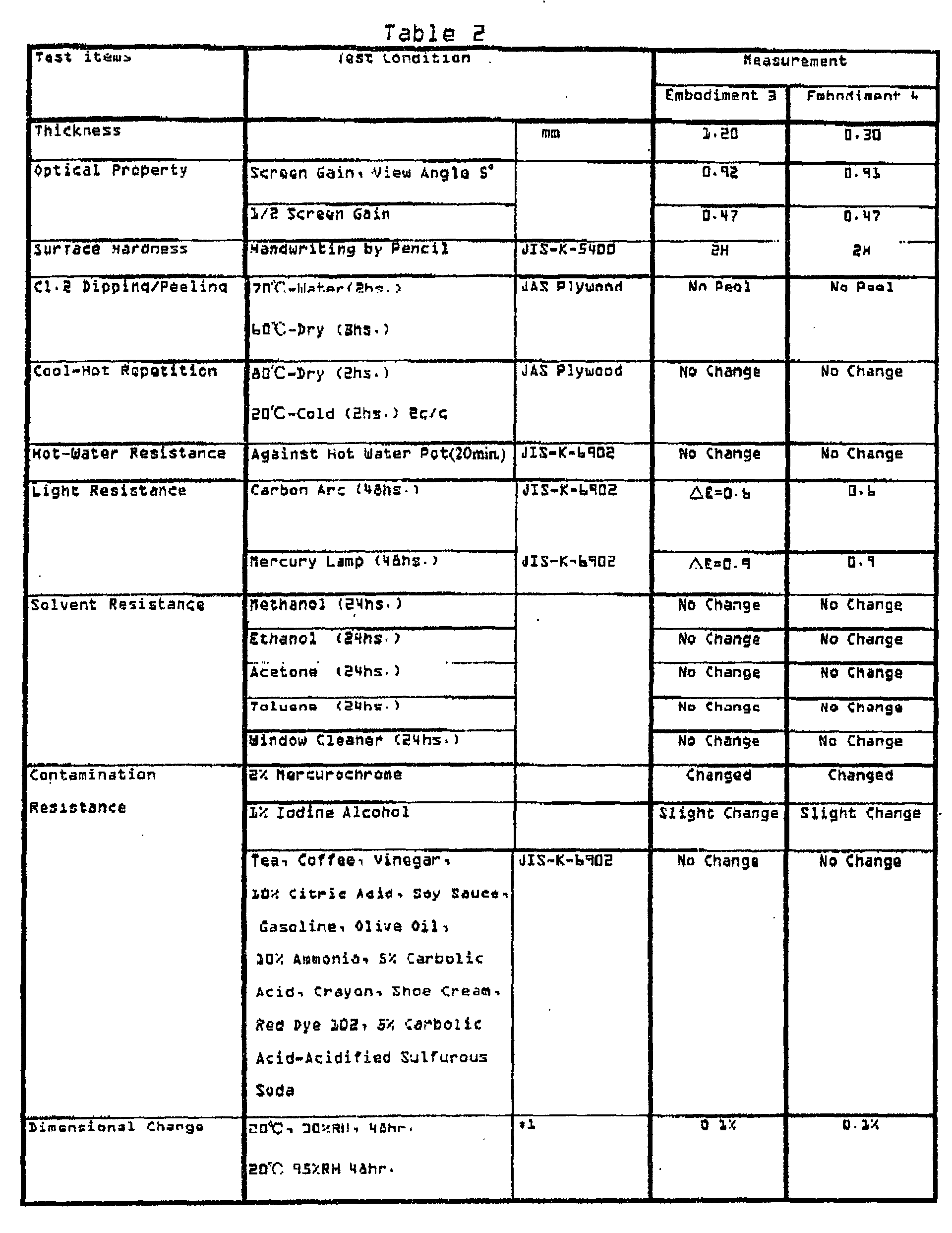

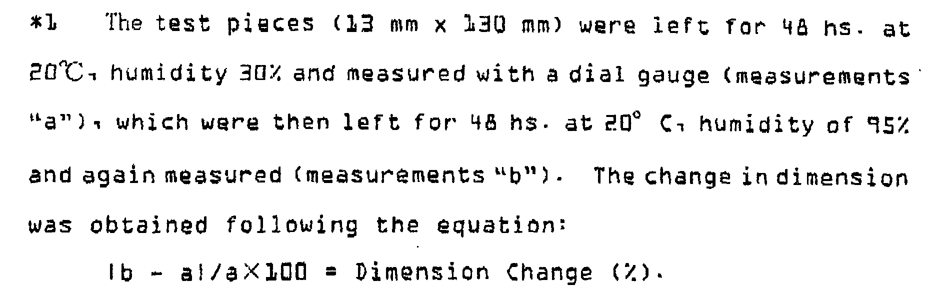

Using embodiments 1-4 and the following comparison samples, comparison tests were conducted with respect to color reproducibility. The tests were carried out by 10 persons by visually examining color impression. Optical property testing was also conducted in relation to total reflectance and diffusion reflectance against a barium sulfate white board.

### Comparison 1

Urethane resin was coated on a PMMA board, which was subjected to hot press at 140° C for about 10 minutes.

### Comparison 2

A solution of 20% silica blended in melamine resin was coated on a PMMA board, which was hardened at 120°C.

### Comparison 3

An MCPET board.

### Comparison 4

A white steel board.

### Comparison 5

An aluminum mirror board.

### Comparison 6

An LumirrorR-E20#188 board (manufactured by Toray Industries, Inc.) (containing titanium oxide in polyethylene phthalate).

All ten testers concluded that the color impression of the projected image each received was practically the same as that of the original image with regard to embodiments 1 and 2. They reported that the projected image was redder than the original image with regard to comparison 1, that the projected image was bluer than the original image with regard to comparison 2, and that the images were unclear because the screen reflected the projected light itself with regard to comparisons 3-6.

The results of the optical property tests (total reflectance and diffusion reflectance) conducted on embodiment 4 and comparison 3-5 are shown in Tables 3 and 4.

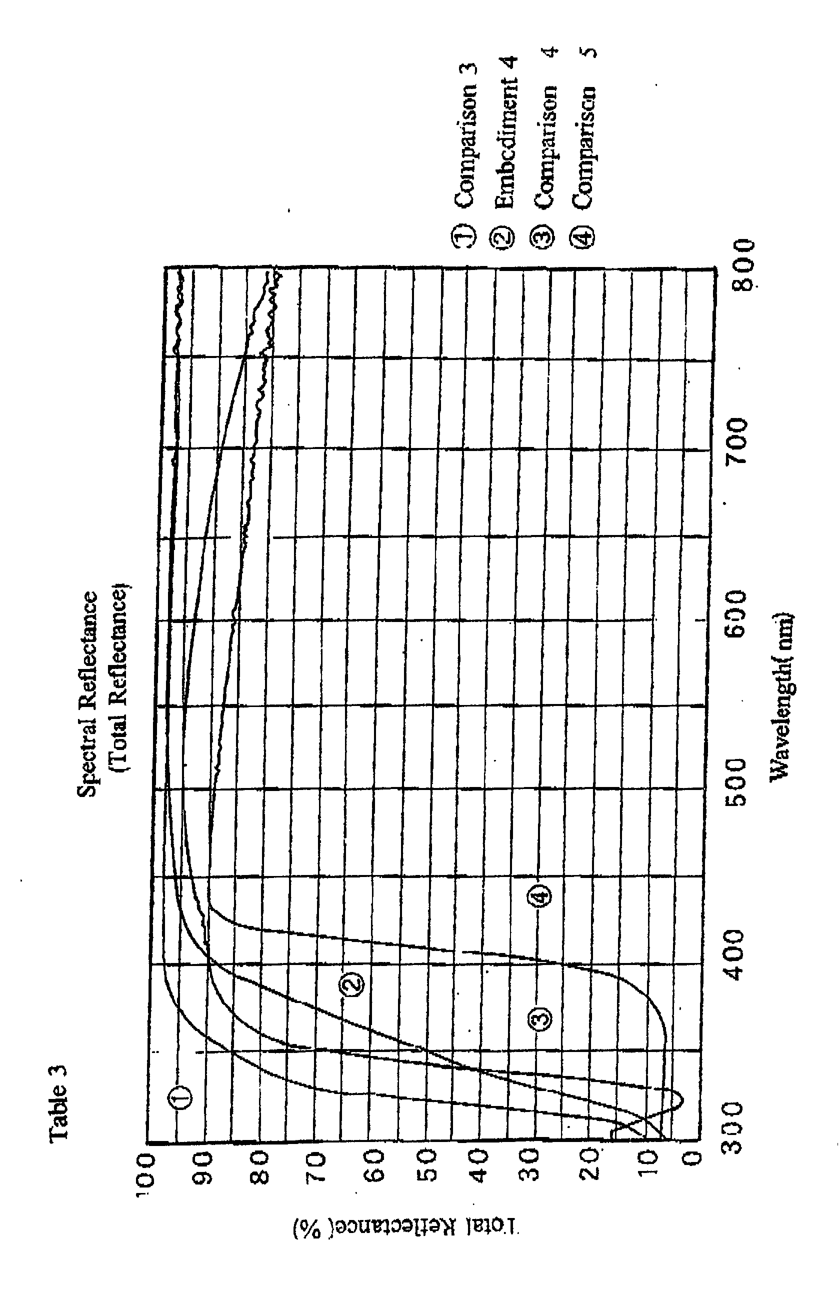

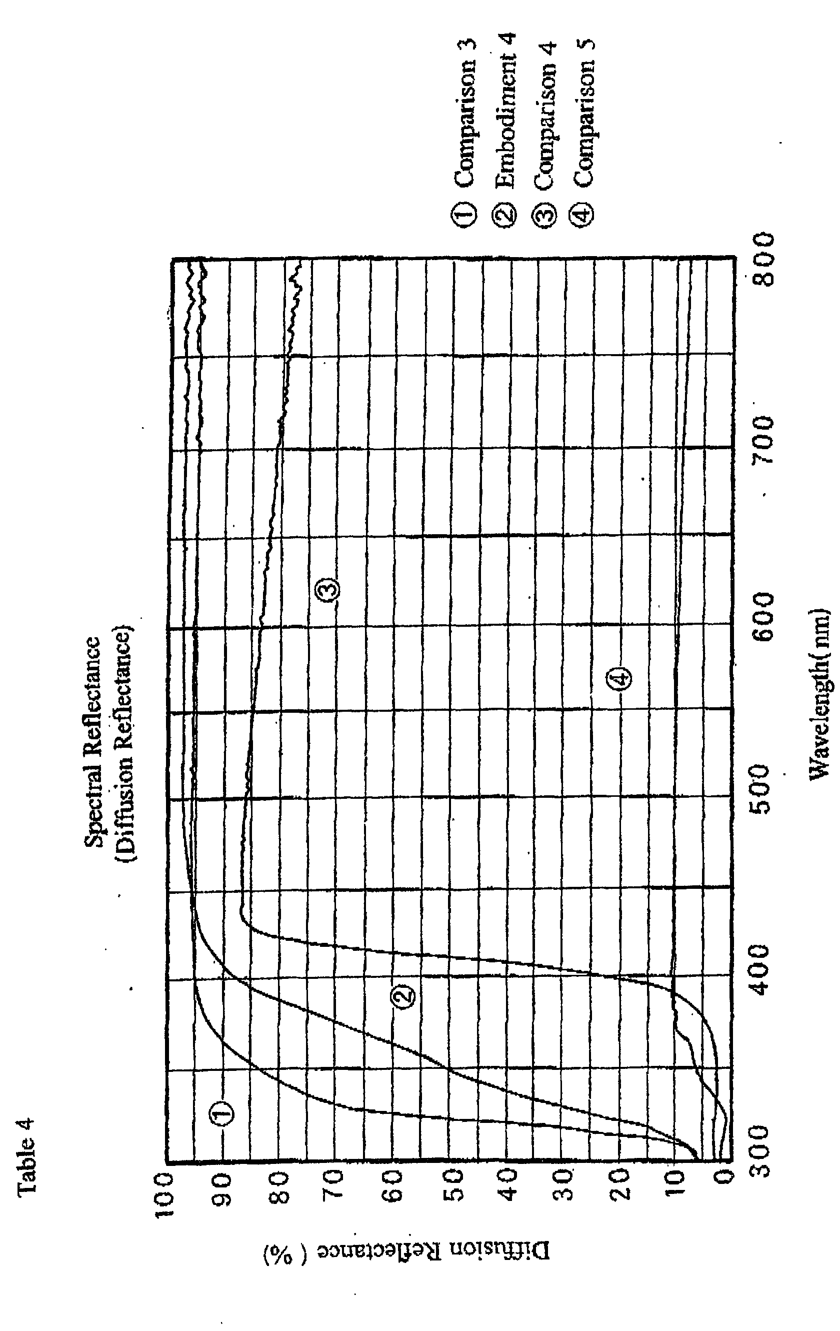

### Embodiment 5

Products or systems utilizing the screens of the present invention are described hereunder.

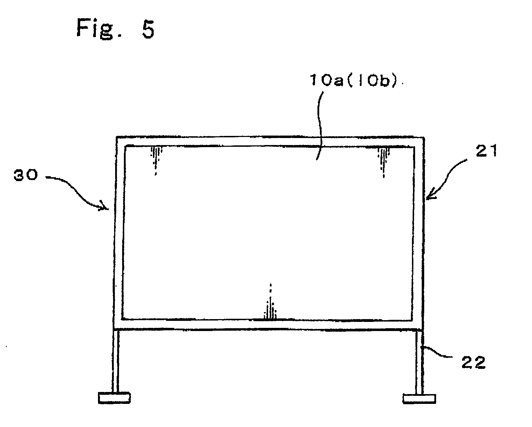

In Fig. 5 is shown a partition incorporating a front screen or rear screen of the present invention. The front screen 10a or rear screen 10b is fixedly mounted on a frame 21 which is supported by support legs 22. The partition 30 with the screen 10a or 10b can serve two purposes, as a partition and a projection screen. This panel screen 30 possesses all advantageous features of the screens 10a, 10b of the present invention thus far described.

### Embodiment 6

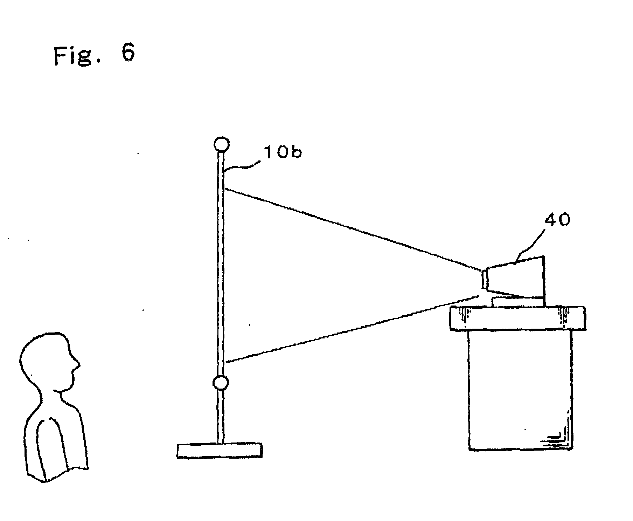

Fig. 6 shows an embodiment use of a rear screen 10b of embodiment 1. A picture is projected with a projector 40 onto the rear screen 10b to be viewed by a person on the opposite side. As the rear screen 10b of embodiment 1 comprises a resin impregnated paper sheet, the screen 10b is flexible and can be rolled up for storage when not in use. The screen will not be softened in use and will not distort images. When a brightening material is blended as taught in embodiment 5, the screen surface is physically resistant. The thermosetting resin will not dissolve against a solvent or water, facilitating writing and drawing on the screen.

### Embodiment 7

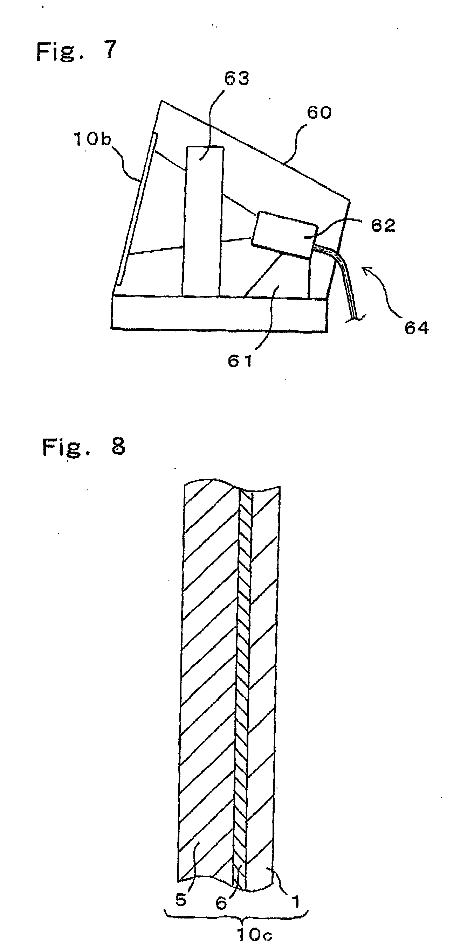

Fig. 7 shows a rear projector 64 comprising a rear screen 10b, a base 61, a light source 62 mounted on the base 61, a slide device 63 positioned between the light source 62 and the rear screen 10b, all which are housed in a housing 60. A film or a slide is inserted into the slide device 63 Can image can be provided utilizing a liquid crystal panel as well). A copy image is provided on the rear screen 10b. Any type of rear projector 64 may be utilized.

The rear screen 10b will not distort even if used for an extended period of time because it is impregnated with a thermosetting resin such as a melamine resin.

### Embodiment 8

Fig. 8 shows an embodiment of a screen product 10c comprising a resin impregnated paper sheet 1 bonded to a surface of a transparent glass pane 5 with an adhesive 6.

It is not necessarily required to apply the adhesive 6 on the entire surface of the resin impregnated paper sheet 1 or the glass pane 5. The adhesive 6 may be only partially applied as long as it can adequately hold the resin impregnated paper sheet 1 and the glass pane 5 securely together.

The adhesive 6 may be an urethane-based adhesive, epoxy-based adhesive or synthetic rubber-based adhesive. Alternatively, the adhesive 6 may be a pressure sensitive adhesive. which facilitates the resin impregnated paper sheet 1 to be removed from the glass pane 5 easily as desired.

### Embodiment 9

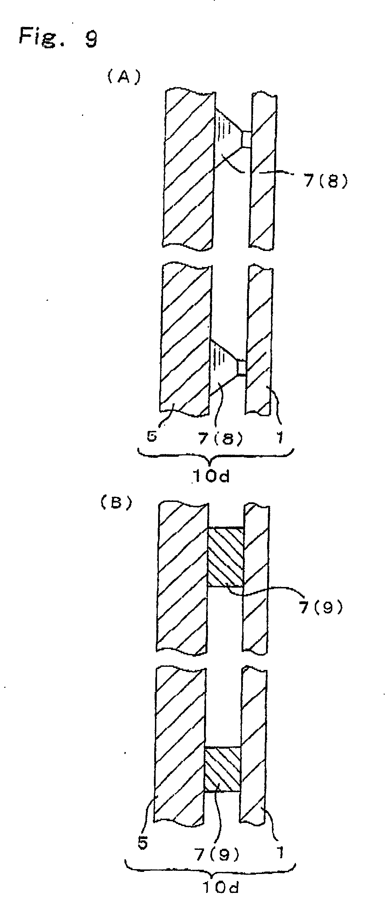

Figs. 9A and 9B show other types of screen products 10 d utilizing a glass pane, which comprises a resin impregnated paper sheet 1 attached to a surface of a glass pane 5 by means of attachment members 7. It is to be noted that there is created a space between the glass pane S and the resin impregnated paper sheet 1.

Fig. 9A shows use of a suction cup or disk 8 as the attachment member 7, and Fig. 9B shows use of a dual type adhesive tape 9 as the attachment member 7. It is very easy to remove the resin impregnated paper sheet 1 from the glass pane 5.

### Embodiment 10

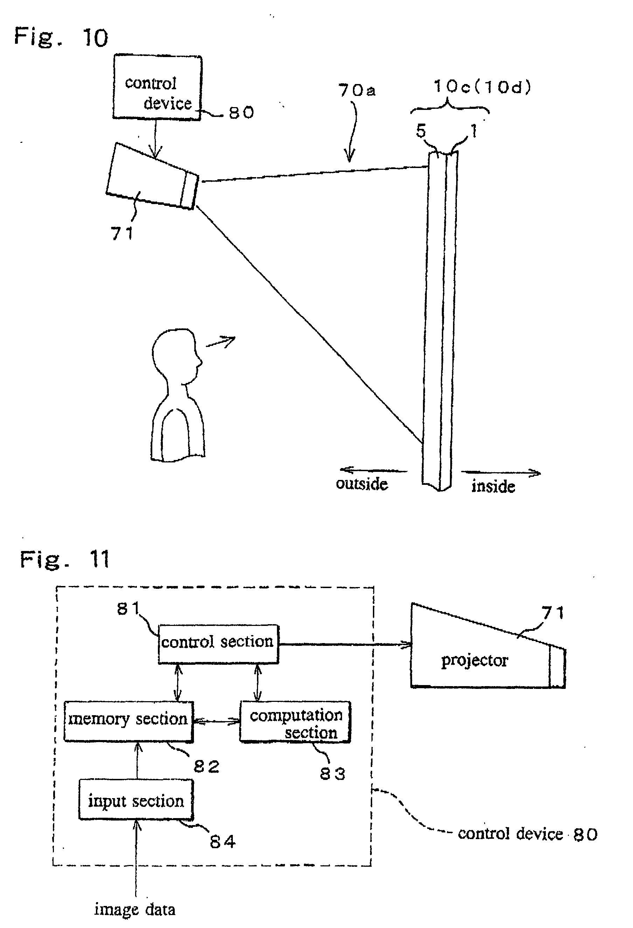

Fig. 10 shows an information board system 70a in which a front screen is used, comprising a front screen 10c (or 10d), a projector 71 and a projector control device 80.

The screen 10c or 10d is attached to a glass wall of a building or shop (not shown) (e.g., show window, shop window, glass window, glass door or fixed sash glass wall). In order to protect the resin impregnated paper sheet 1 from damages, the glass wall 5 is positioned outside.

The projector 71 is positioned at an appropriate location outside of the building or shop. An image (or a picture) projected from the projector 71 onto the screen 10c or 10d is seen through the glass wall 5. People walking on the street facing the screen 10c or 10d can view the image projected onto the screen 10c or 10d.

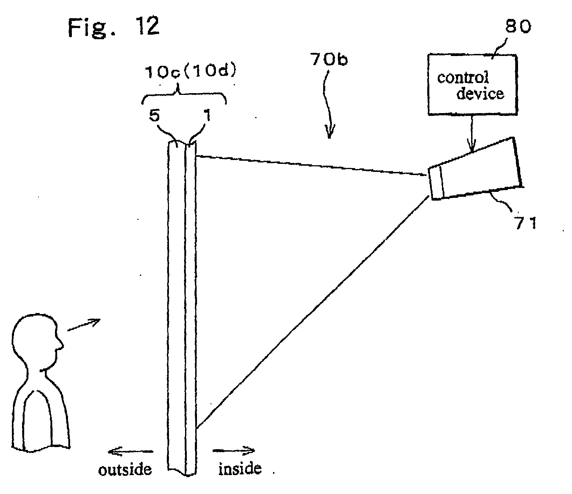

Fig. 11 is a block diagram of the projector control device 80. The control device 80 comprises a control section 81 which transmits images to the projector 71, memory section 82, computation section 83 and input section. Image data inputted into the control device 80 via the input section 84 is stored in the memory section 82. The image data retrieved from the memory section 82 is processed into a control data by the computation section 83. The control section 81 controls the projector 71 in accordance with the control data.

### Embodiment 11

Fig. 12 shows another type of an information board system 70b in which a rear screen is used, comprising a rear screen 10c (or 10d), projector 71 and projector control device 80 which can be identical with the one for the information board system 70a of embodiment 10.

Embodiment 11 differs from embodiment 10 in that the projector 71 is positioned at inside a building or shop, whereby images projected from the projector 71 onto the screen 10c or 10d are seen from outside the building or shop.

According to the present invention which has been described in detail, the screen of the present invention can be folded and stored, and can be used for a long period of time without distortion. Letters written or pictures drawn on the screen can be cleaned easily. A pointer will not damage the screen.

The total reflectance of 99% and diffusion reflectance of 95% can be attained. Blue light and red light can be reflected in equal contrast. Equal reflection in a visible light range 400 to 700 nm is possible. The resin impregnated paper sheet can be attached to a glass pane to provide a front-type or rear-type screen board. The information board system provides an excellent advertisement medium.

When the advertisement content is to be changed, mere change of image films will do. Such a change is quite simple and easy. Further, it is not necessary to replace the whole screen with another. Therefore, advertisement costs can be kept minimal.

## Claims

1. A front screen comprising a resin impregnated paper sheet.

2. A front screen comprising a resin impregnated paper sheet impregnated with a thermosetting resin.

3. A front screen according to claim 1 or 2, said resin impregnated paper sheet further comprising a brightening material.

4. A front screen comprising a resin impregnated paper sheet and a thermoplastic resin sheet.

5. A front screen according to claim 4, wherein said resin impregnated paper sheet is impregnated with a thermosetting resin.

6. A front screen according to claim 4, wherein said resin impregnated paper sheet further contains a brightening material.

7. A front screen according to claim 4, wherein said thermoplastic resin sheet has a total reflectance equal to or greater than 90% and a whiteness (JIS-L-1-1015) equal to or greater than 80%.

8. A front screen according to claim 4, wherein said thermoplastic resin sheet contains pores.

9. A front screen according to claim 8, wherein the mean pore size of said pores is 1 to 100µm.

10. A front screen according to claim 4, wherein said thermoplastic resin sheet comprises at least one resin selected from the group consisting of polyethylene terephthalate, vinyl chloride, polymethyl methacrylate, polyolefin and polyester resins.

11. A front screen partition comprising a frame and a front screen according to any of claims 1-10 mounted on said frame.

12. A front screen product comprising a glass pane and a front screen according to any of claims 1-10 mounted over said glass pane.

13. An information board system comprising:
a front screen according to claim 12, said glass pane being a glass wall or window;
a projectors and
a projector control device comprising a control section, memory section, computation section and input section,
wherein image data inputted through said input section is stored in said memory section to be converted at said computation section into control data, which is sent to said projector via said control section so that said image data is converted into an image on said front screen.

14. A rear screen comprising a resin impregnated paper sheet.

15. A rear screen comprising a resin impregnated paper sheet impregnated with a thermosetting resin.

16. A rear screen according to claim 14 or 15, said resin impregnated paper sheet further comprising a brightening material.

17. A rear screen partition comprising a frame and a rear screen according to any of claims 14-16 mounted on said frame.

18. A rear screen product comprising a glass pane and a rear screen according to any of claims 14-16 mounted over said glass pane.

19. A rear projector comprising:
a rear screen according to any of claims 14-16;
a slide device which manipulates films or LC panels; and a light source for projecting images on said films or LC panels onto said rear screen.

20. An information board system comprising:
a rear screen according to claim 18, said glass pane being a glass wall or window;
a projector; and
a projector control device comprising a control sections memory section, computation section and input section,
wherein image data inputted through said input section is stored in said memory section to be converted at said computation section into control data, which is sent to said projector via said control section so that said image data is converted into an image on said rear screen.
